(19) Europäisches Patentamt
European Patent Office
Office européen des brevets

(11) Publication number: 0 387 289 B1

(12) # EUROPEAN PATENT SPECIFICATION

(45) Date of publication of patent specification: **08.09.93**

(51) Int. Cl.$^5$: **C10G 35/085**

(21) Application number: **89900078.0**

(22) Date of filing: **04.11.88**

(86) International application number:
**PCT/US88/03948**

(87) International publication number:
**WO 89/04860 (01.06.89 89/12)**

(54) **CATALYTIC REFORMING PROCESS.**

(30) Priority: **17.11.87 US 122089**
**03.12.87 US 128359**

(43) Date of publication of application:
**19.09.90 Bulletin 90/38**

(45) Publication of the grant of the patent:
**08.09.93 Bulletin 93/36**

(84) Designated Contracting States:
**BE DE FR GB IT NL SE**

(56) References cited:
**EP-A- 0 251 564**
**WO-A-88/08329**
**DD-A- 136 344**
**US-A- 4 046 713**
**US-A- 4 458 025**

(73) Proprietor: **MOBIL OIL CORPORATION**
**150 East 42nd Street**
**New York New York 10017(US)**

(72) Inventor: **ABSIL, Robert, Peter**
**P-311 Heather Ridge Apartments**
**Mantua, NJ 08051(US)**
Inventor: **DESSAU, Ralph, Moritz**
**811 St. Regis Court**
**Mantua, NJ 08051(US)**
Inventor: **HUSS, Albin, Jr.**
**51 Stirling Way**
**Chadds Ford, PA 19317(US)**
Inventor: **McHALE, William, Depaul**
**32 Monroe Street**
**Swedesboro, NJ 08085(US)**
Inventor: **PARTRIDGE, Randall, David**
**58 Jacobs Creek Road**
**West Trenton, NJ 08628(US)**

(74) Representative: **Colmer, Stephen Gary et al**
**Patent Department, Mobil Court, 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to catalytic reforming process.

Catalytic reforming of naphtha feed stocks has long been known in the petroleum industry. Most naphtha feed contain large amounts of naphthenes and paraffins and consequently have low octane numbers. By means of various hydrocarbon conversion reactions, catalytic reforming has improved the octane number of naphtha feed stocks. Some of the more important conversion reactions that take place during catalytic reforming are dehydrogenation of napthenes to aromatics, dehydrocyclization of paraffins to napthenes and aromatics and isomerization of normal paraffins to isoparaffins. A less desirable reaction which also occurs during reforming is the hydrocracking of paraffins, napthenes and dealkylation of alkylaromatics to gaseous hydrocarbons such as methane and ethane.

The above reforming reactions have previously been catalyzed by catalysts comprising porous supports, such as alumina, that have dehydrogenation promoting metal components impregnated or admixed with the support. Platinum on alumina and, more recently, multimetallics, including bimetallics, such as platinum and rhenium on alumina, are examples of these catalysts. Representative multimetallic reforming catalysts are described in U.S. Patent Nos. 2,848,377, 3,415,737 and 3,953,368, among others.

US-A-4,458,025 discloses a reforming catalyst comprising a platinum-impregnated composite of zeolite L and sodium stabilized Ludox.

US-A-4,046,713 discloses preparation of a catalyst by extruding a mixture of alumina hydrosol, finely divided alumina and finely divided crystalline aluminosilicate.

Other known reforming catalysts are based on zeolites containing a noble metal component such as platinum. U.S. Patent No. 4,582,815 describes a method for preparing a silica-bound zeolite catalyst composition of improved crush strength relative to other silica-rich extrudates. According to this method, a mixture of silica and a zeolite sub as ZSM-4 (Omega), ZSM-5, ZSM-11, ZSM-12, ZSM-23, ZSM-35, ZSM-38, ZSM-48, Beta, X, Y, L, ferrierite, mordenite, dachiardite, clinoptilolite, offretite, erionite. gmelinite or chabazlte is mixed with water and an alkali metal base such as sodium hydroxide or a basic salt such as an alkali-metal carbonate, borate, phosphate or silicate as an extrusion aid followed by mulling, extruding and subsequently drying the extrudate. It is thought that substitution of alkali metal for hydrogen in the silanol groups on the surfaces of siliceous materials such as the foregoing zeolites is responsible for their improved crush strength. The resulting extrudate is said to possess superior crush strength and sufficient integrity to withstand treatment with acids so that it is possible to steam, acid extract or calcine them. To avoid trapping the alkali metal of the extrusion aid in the extrudate, the alkali metal is ordinarily removed by exchange under acidic conditions using dilute nitric acid in 1M ammonium nitrate solution. The silica-bound zeolite catalyst of U.S. Patent No. 4,582,815 is indicated to be useful in a variety of hydrocarbon conversions including reforming.

It has now been discovered that zeolites which are known to be useful in catalytic reforming operations, i.e. intermediate and large pore zeolites, when bound with a low acidity refractory oxide binder material and containing at least one metal species selected from the platinum group metals and employed in the reforming of naphtha range materials, show improved selectivity for the conversion of paraffins to aromatics compared to known and conventional bimetallic reforming catalysts such as platinum-rhenium or alumina.

Thus in accordance with the present invention a catalytic reforming process comprises contacting a naphtha range feed with an extruded catalyst comprising a zeolite having a constraint index not greater than 12, a platinum group metal and a refractory oxide binder, the zeolite constituting 5 to 80 weight percent of the composite of zeolite and binder on a dry basis, characterized in that the zeolite has an alpha value less than 20 and that as binder there is used a low-acidity material containing at least 40 weight percent of silica present at least partly in colloidal form for the purpose of facilitating extrusion, from 1 to 90 weight percent of said binder being constituted by said colloidal-form silica.

Due to the inherently low acidity of the refractory oxide binder, the catalyst composition employed in the foregoing process minimizes non-selective hydrocracking of the naphthenes to gaseous hydrocarbons such as methane and ethane while enhancing dehydrocyclization of paraffins to high-octane aromatics, a significant advantage compared to conventional reforming processes employing the relatively acidic alumina-supported bimetallic catalysts such as platinum-rhenium.

The zeolite component of the catalyst composition used in the reforming process of this invention is selected from those of the intermediate and large pore variety. Preferably the zeolite has a Constraint Index (see U.S. Patent No. 4016218) not more than 12.

Suitable intermediate pore size zeolites include ZSM-5, ZSM-11, ZSM-23, ZSM-35 and ZSM-57. ZSM-5 is described in U.S. Patent Reissue No. 29,948 (of original U.S. Patent No. 3,702,886), ZSM-11 is described in U.S. Patent No. 3,709,979, ZSM-23 is described in U.S. Patent No. 4,076,842, ZSM-35 is described in U.S. Patent No. 4,016,245, and ZSM-57 is described in FP-A-174121. Such zeolites typically have a Constraint Index of 1 - 12.

Representative of suitable large pore zeolites are ZSM-3, ZSM-4, ZSM-12, ZSM-20, zeolite beta, zeolite L, zeolite X, zeolite Y, REY, USY, RE-USY, mordenite, LZ-210, LZ-210-M, LZ-210-T, LZ-210-A, and mixtures thereof. ZSM-3 is described in U.S. Patent No. 3,415,736. ZSM-4 is described in U.K. Patent Specification No. 1,117,568. ZSM-12 is described in U.S. Patent No. 3,832,449. ZSM-20 is described in U.S. Patent No. 3,972,983. Zeolite beta is described in U.S. Patent Reissue No. 28,341 (of original U.S. Patent No. 3,308,069). Zeolite L is described in U.S. Patent No. 3,216,789. Zeolite X is described in U.S. Patent No. 2,882,244. Zeolite Y is described in U.S. Patent No. 3,130,007. LZ-210, LZ-210M, LZ-210-T, LZ-210-A and mixtures thereof are described in U.S. Patent No. 4,534,853. Such large pore zeolites typically have a Constraint Index below 1.

The zeolites used herein can contain one or more framework elements other than, or in addition to, aluminum, e.g., the borosilicate zeolites, and/or can be modified to alter their as-synthesized framework silica-alumina ratios. By way of illustrating the latter, ultrastable zeolite Y ("USY"), prepared by any of the known and conventional methods, e.g., those disclosed in U.S. Patent Nos. 3,293,192; 3,375,065; 3,402,996; 3,449,070; and 3,595,611 and in Scherzer, Journal of Catalysis, 54, 285-288 (1978), is advantageously employed in the reforming process of this invention.

Also included among the useful zeolites are materials of similar structure or behavior, e.g., crystalline metallophosphates such as those described in U.S. Patent No. 4,440,871.

The binder material can be selected from among any of the low acidity refractory oxides of elements of Groups IVA and IVB of the Periodic Table of the Elements. Particularly useful are the oxides of silicon, germanium, titanium and zirconium with silica being preferred. Combinations of such oxides with other oxides are also useful provided that at least about 40 weight percent, and preferably at least 50 weight percent, of the total oxide is one or a combination of the aforesaid Group IVA and/or Group IVB metal oxides. Thus, mixtures of oxides which can be used to provide the binder material herein include silica-alumina, silica-magnesia, silica-zirconia, silica-thoria, silica-beryllia, silica-titania, titania-zirconia, silica-alumina-thoria, silica-alumina-zirconia, silica-alumina-magnesia and silica-magnesia-zirconia.

In preparing the low acidity refractory oxide-bound intermediate and/or large pore zeolite catalyst employed herein, it is important that the refractory oxide binder contains at least an extrusion-facilitating amount of the same and/or a different low acidity refractory oxide in colloidal form. The colloidal Group IVA and or Group IVB metal oxide component of the binder can represent anywhere from about 1 to 90 weight percent or more of the total binder. For example, in the case of silica, amounts of colloidal silica ranging from 2 to 60 weight percent of the total binder generally provide acceptable results.

The relative proportions of zeolite and low acidity refractory oxide binder on an anhydrous basis can vary widely with the zeolite content ranging from between 1 to 99 weight percent, and more usually in the range from 5 to 80 weight percent, of the dry composite.

Extrudates used in the present process typically have a crush strength of 7 to 34 N/mm (40 to 192 1b/linear inch) and a high porosity, i.e., between 0.43 and 1 cc/gram (measured by mercury porosimeter and helium absorption).

To achieve a low acidity refractory oxide-bound zeolite catalyst employed herein, it is preferred that the acid activity, as measured by alpha activity of the zeolite, be controlled, i.e., reduced to minimize the amount of hydrocracking, thereby increasing the gasoline yield. The alpha value, or alpha activity, is a measure of normal hexane cracking conversion relative to a silica-alumina cracking catalyst. The alpha test is described in a letter to the Editor entitled "Superactive Crystalline Aluminosilicate Hydrocarbon Cracking Catalyst" by P.B. Weisz and J.N. Miale, Journal of Catalysis, Vol. 4, No. 4, August 1965, pages 527-529. The zeolite employed in the present process is selected so as to have an alpha value less than 20 and preferably less than 5.

Low acidity zeolites can be synthesized directly at high $SiO_2/Al_2O_3$ ratios, with or without addition of alumina. Alternatively, the acid activity of the zeolite can be reduced either before or after binding with a low acidity refractory oxide. The reaction in acid activity of the catalyst can be achieved by any of the techniques or combinations thereof known to those skilled in the art. The aforementioned techniques include, for example, high temperature calcination as described in U.S. Patent No. 3,965,209; exposure to steam at high temperature as described in U.S. Patent No, 4,016,218; and exchange with a suitable alkali metal as described in U.S. patent No. 4,634,518.

The expression "platinum group metals" denotes platinum, palladium, osmium, iridium, ruthenium, or rhodium and mixtures thereof, To these platinum group, metals can also be added non-platinum group metals such as tin, indium and metals of Group VIIB such as rhenium. These metals can be readily introduced into the zeolite employing a variety of known and conventional techniques, e.g., ion-exchange as disclosed in a number of patents including U.S. Patent Nos. 3,140,249; 3,140,251; ad 3,140,253. As is recognized by those skilled in the art, it may be necessary to carry out ion-exchange within controlled pH parameters, e.g., between 4 to 9, to avoid irreversible loss of catalyst and/or binder integrity. The metals in the form of their oxides or salts can also be added to the low acidity refractory oxide during the mulling step with pH adjustment, if necessary, to stabilize the colloidal oxide component of the mixture.

The naphtha charge stocks which can be reformed in accordance with the process of this invention include typical reforming stocks, namely virgin naphthas, cracked naphthas, partially reformed naphthas and hydrotreated naphthas. The charge stocks will normally be composed of $C_6$ - $C_{12}$ hydrocarbon mixtures.

The reforming process of the invention generally takes place at WHSV of 0.5 to 50, preferably 1 to 20, a temperature of 427 - 566 °C (800° to 1050 °F), a pressure of 100 - 3550 kPa (0 to 500 psig) and a ratio of hydrogen to hydrocarbons of 1 - 10. The process can be carried out in a single reactor or in a series of reactors at least one of which contains the low acidity refractory oxide-bound zeolite extrudate described herein.

The invention will now be more particularly described with reference to the Examples and the accompanying drawings, in which;

Figs. 1 and 2 are graphical representations of experimental data showing, respectively, the selectivity and the stability of a platinum-containing silica-bound USY catalyst employed in the reforming operation of Example 2 compared with that of a conventional alumina-supported platinum-rhenium catalyst employed under substantially similar reforming conditions.

EXAMPLE 1

This example illustrates the preparation of a silica-bound USY catalyst.

Sixty-five weight percent of USY zeolite (Z-14 US as supplied by W.R. Grace) in the form of a powder was mixed with 35 weight percent (dry basis) of silica consisting of a mixture of 26.2 weight percent amorphous precipitated silica (PPG Industries HiSil 233 EP) and 8.8 weight percent colloidal silica (Ludox, HS-30). A homogeneous mix was obtained by mulling. The moisture content of the mix was adjusted to 42-47 weight percent with deionized water. After additional mulling, the resulting paste was extruded to yield 0.16 mm diameter extrudates. The extrudates were subsequently dried at 121 °C (250 °F), typically for 18 hours in air, and then calcined at 537.8 °C (1000 °F) for 3 hours in flowing air. In this and all subsequent calcining operations referred to herein unless otherwise indicated, air flow rates of about 5 v/v/min and heating rates of 3 °C/min (5 °F/min) were used. After ammonium exchanging three times at ambient temperature for 1 hour with 5 ml/g circulating 1N ammonium nitrate, the extrudate was washed and dried at 121 °C (250 °F) in air and subsequently calcined at 537.8 °C (1000 °F) for 3 hours in flowing air. The silica-bound USY composition was then steamed for 10 hours at 648.9 °C (1200 °F) in 1 atm steam to dealuminate the zeolite and to further reduce the alpha activity to 6. To reeve residual sodium ad non-framework alumina resulting from steaming, the extrudate was exchanged twice at ambient temperature for 1 hr with 5ml/g circulating 1N $HNO_3$ solution, dried at 121 °C (250 °F) and calcined for 3 hrs at 537.8 °C (1000 °F), the result being an alpha value of 38. Following steaming of the silica-USY composite at 648.9 °C (1200 °F) for 10 hours in 1 atm steam and exchanging twice at ambient temperature with 5 ml/g circulating 1N $HNO_3$ solution, drying at 121 °C (250 °F) and calcining at 537.8 °C (1000 °F) for 3 hrs, the silica-USY composited catalyst possessed an alpha activity of 3. The properties of the as-received USY zeolite and the physical properties of the silica-USY catalyst resulting from these operations, identified as Catalyst A, are set forth in Tables 1 and 2, respectively:

Table 1

| Properties of USY Zeolite | |
|---|---|
| Alumina, wt% | 22.2 |
| Silica, wt% | 68.5 |
| $SiO_2/Al_2O_3$ (Molar) | 5.3 |
| Na, wt% | 2.6 |
| Surface Area, $m^2/g$ | 594 |
| Crystallinity, % | 110 |
| Unit Cell Size, Angstroms | 24.52 |
| Sorption $H_2O$ (P = 1600Pa), wt% | 27.1 |
| Sorption $CyC_6$ (P = 5330Pa), wt% | 18.1 |
| Sorption $nC_6$ (P = 5330Pa), wt% | 17.1 |

Platinum was introduced into the silica-bound zeolite catalyst composition via excess solution ion exchange for 4 hrs with $Pt(NH_3)_4Cl_2/NH_4OH$ solution while maintaining the pH of the exchange solution at 9. Following washing and drying at 121 °C (250 °F), the catalyst was calcined at 343.3 °C (660 °F) for 3 hrs at a heating rate of 1.1 °C/min (2 °F/min) to convert the platinum to the oxide.

The physical properties of the base composition prior to platinum addition (Catalyst A) ad those of the platinum loaded silica-bound USY catalyst composition (Catalyst B) are set forth in Table 2 as follows:

Table 2

| Property | Catalyst A | Catalyst B |
|---|---|---|
| Alpha | 3 | -- |
| Pt, wt% | 0.0 | 0.6 |
| Na, wt% | ND | 0.02 |
| $nC_6$, wt% | 9.9 | 9.4 |
| $CyC_6$, wt% | 10.4 | 10.3 |
| Density, g/cc | | |
| Real | 2.36 | -- |
| Particle | 0.85 | -- |
| Surface Area, $m^2/g$ | 372 | 350 |
| Pore Volume, cc/g | 0.75 | 0.75 |

EXAMPLE 2

Catalyst B of Example 1 and a conventional reforming catalyst composition (Catalyst C: 0.6 wt% combined platinum and rhenium on alumina) were evaluated for their effectiveness in a reforming operation carried out under the following conditions:

| | |
|---|---|
| Pressure: | 790 kPa (100 psig) |
| Temperature: | 510 °C (950 °F) |
| WHSV: | 3 |
| $H_2$/HC ratio: | 3/1 |

The catalysts were heated to 510 °C (950 °F) in flowing hydrogen and, once the desired temperature and gas flows were achieved, the feedstock was introduced. For the initial comparisons, n-hexane was used as the feed and the products were analyzed on-line by gas chromatography. The results set forth in Table 3 below show the improved aromatics selectivity of Catalyst B compared to conventional Catalyst C. While the two catalysts gave comparable $C_1$-$C_4$ gas yields, the use of Catalyst B resulted in significantly higher aromatics yields.

Table 3

Catalyst Performance Comparison

| | Catalyst B | Catalyst C |
|---|---|---|
| Time on Stream, Hrs | 47 | 44 |
| Product Yields, Wt.% | | |
| $C_1$ | 2.6 | 0.9 |
| $C_2$ | 4.3 | 6.0 |
| $C_3$ | 19.3 | 8.6 |
| $C_4$ | 7.7 | 15.7 |
| Total $C_1$-$C_4$ | 33.9 | 31.2 |
| Aromatics | 18.5 | 8.1 |
| Selectivity x 100 | 35.3 | 20.6 |

The selectivity results listed in Table 3 are defined as the weight percent aromatics in the product divided by the sum of the aromatics plus $C_1$ through $C_4$ produced. The selectivity of Catalyst B is graphically compared to that of Catalyst C in Figure 1. Catalyst B maintained its high selectivity for the duration of the approximately 100 hrs evaluation. Furthermore, a comparison of aromatics yield as a function of total time on-stream, given in Figure 2, clearly indicates greater stability for Catalyst B.

**Claims**

1. A catalyst reforming process which comprises contacting a naphtha range feed with an extruded catalyst comprising a zeolite having a constraint index not greater than 12, a platinum group metal and a refractory oxide binder, the zeolite constituting 5 to 80 weight percent of the composite of zeolite and binder on a dry basis, characterized in that the zeolite has an alpha value less than 20 and that as binder there is used a low-acidity material containing at least 40 weight percent of silica at least partly in colloidal form for the purpose of facilitating, extrusion from 1 to 90 weight percent of said binder being constituted by said colloidal-form silica.

2. The process of claim 1 wherein the zeolite has an alpha value less than 5.

3. The process of any preceding claim wherein the zeolite is selected from ZSM-5, ZSM-11, ZSM-23, ZSM-35, ZSM-57, ZSM-3, ZSM-4, ZSM-12, ZSM-20, zeolite beta, zeolite L, zeolite X, zeolite Y, zeolite REY, zeolite USY, zeolite RE-USY, LZ-210, LZ-210-M, LZ-210-T, LZ-210-A and mordenite.

4. The process of any preceding claim wherein the reforming conditions include a WHSV of 0.5 to 50, a temperature of 427 to 566°C (800 to 1050°F), a pressure of 101.35-3548.85 kPa (0 to 500 psig) and a molar ratio of hydrogen to hydrocarbons of 1 to 10.

**Patentansprüche**

1. Katalytisches Reformierungsverfahren, welches den Kontakt einer Beschickung im Rohbenzinbereich mit einem extrudierten Katalysator umfaßt, der einen Zeolith mit einem Zwangsindex von nicht mehr als 12, ein Metall der Platingruppe und ein hitzebeständiges Oxidbindemittelmaterial umfaßt, wobei der Zeolith auf der Trockenbasis 5 bis 80 Gew.-% des Verbundmaterials aus Zeolith und Bindemittel bildet, dadurch **gekennzeichnet**, daß der Zeolith einen α-Wert von weniger als 20 hat und daß als Bindemittel ein Material mit geringer Acidität verwendet wird, das mindestens 40 Gew.-% Siliciumdioxid enthält, das zumindest teilweise in kolloidaler Form vorhanden ist, um die Extrusion zu erleichtern, wobei 1 bis 90 Gew.-% des Bindemittels durch dieses Siliciumdioxid in kolloidaler Form gebildet werden.

**2.** Verfahren nach Anspruch 1, worin der Zeolith einen α-Wert von weniger als 5 hat.

**3.** Verfahren nach einem der vorstehenden Ansprüche, worin der Zeolith aus ZSM-5, ZSM-11, ZSM-23, ZSM-35, ZSM-57, ZSM-3, ZSM-4, ZSM-12, ZSM-20, Zeolith Beta, Zeolith L, Zeolith X, Zeolith Y, Zeolith REY, Zeolith USY, Zeolith RE-USY, LZ-210, LZ-210-M, LZ-210-T, LZ-210-A und Mordenit ausgewählt ist.

**4.** Verfahren nach einem der vorstehenden Ansprüche, worin die Reformierungsbedingungen eine WHSV von 0,5 bis 50, eine Temperatur von 427 bis 566°C (800 bis 1050°F), einen Druck von 101,35 bis 3548,85 kPa (0 bis 500 psig) und ein Molverhältnis von Wasserstoff zu Kohlenwasserstoffen von 1 bis 10 umfassen.

**Revendications**

**1.** Un procédé de reformage catalytique qui comprend la mise en contact d'une charge de la gamme des naphta avec un catalyseur extrudé comprenant un zéolite ayant un indice de contrainte qui n'est pas supérieur à 12, un métal appartenant au groupe du platine et un liant à base d'oxyde réfractaire, la zéolite constituant 5 à 80% en poids sec du composite de zéolite et de liant, caractérisé en ce que la zéolite présente une valeur alpha inférieure à 20, et en ce que le liant qui est utilisé correspond à un matériau de faible acidité qui contient au moins 40% en poids de silice et qui est présent au moins partiellement sous une forme colloïdale dans le but de faciliter l'extrusion, de 1 à 90% en poids dudit liant étant constitué par ladite silice sous forme colloïdale.

**2.** Le procédé selon la revendication 1, dans lequel la zéolite présente une valeur alpha inférieure à 5.

**3.** Le procédé selon l'une quelconque des revendications précédentes, dans lequel la zéolite est sélectionnée dans le groupe composé de ZSM-5, ZSM-11, ZSM-23, ZSM-35, ZSM-57, ZSM-3, ZSM-4, ZSM-12, ZSM-20, zéolite bêta, zéolite L, zéolite X, zéolite Y, zéolite REY, zéolite USY, zéolite RE-USY, LZ-210, LZ-210-M, LZ-210-T, LZ-210-A et mordénite.

**4.** Le procédé selon l'une quelconque des revendications précédentes, dans lequel les conditions de reformage incluent une VSHP comprise entre 0,5 et 50, une température comprise entre 427°C et 566°C (entre 800 et 1050°F), une pression comprise entre 101,35 et 3548,85 kPa (entre 0 et 500 psig) et un rapport molaire hydrogène/hydrocarbure compris entre 1 et 10.

Fig. 1

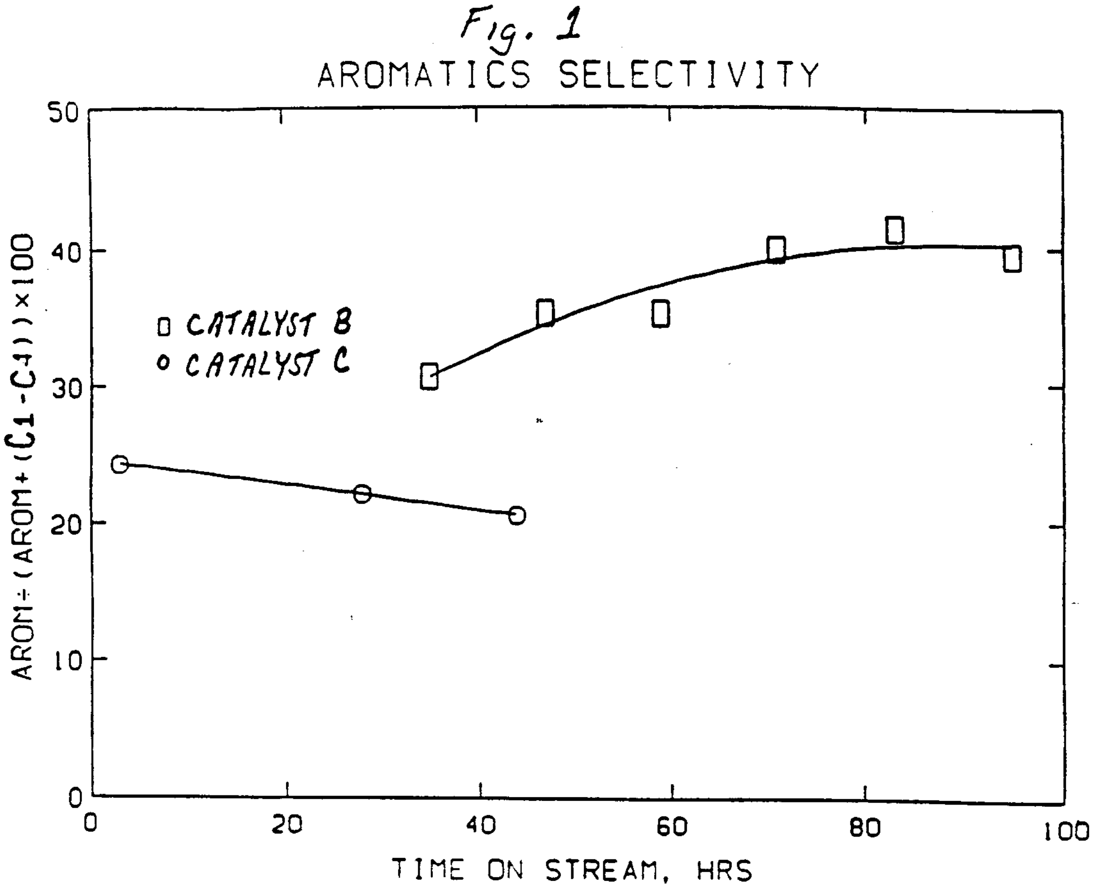
AROMATICS SELECTIVITY
AROM÷(AROM+(C1-C4))×100
CATALYST B
CATALYST C
0
10
20
30
40
50
0
20
40
60
80
100
TIME ON STREAM, HRS

Fig. 2

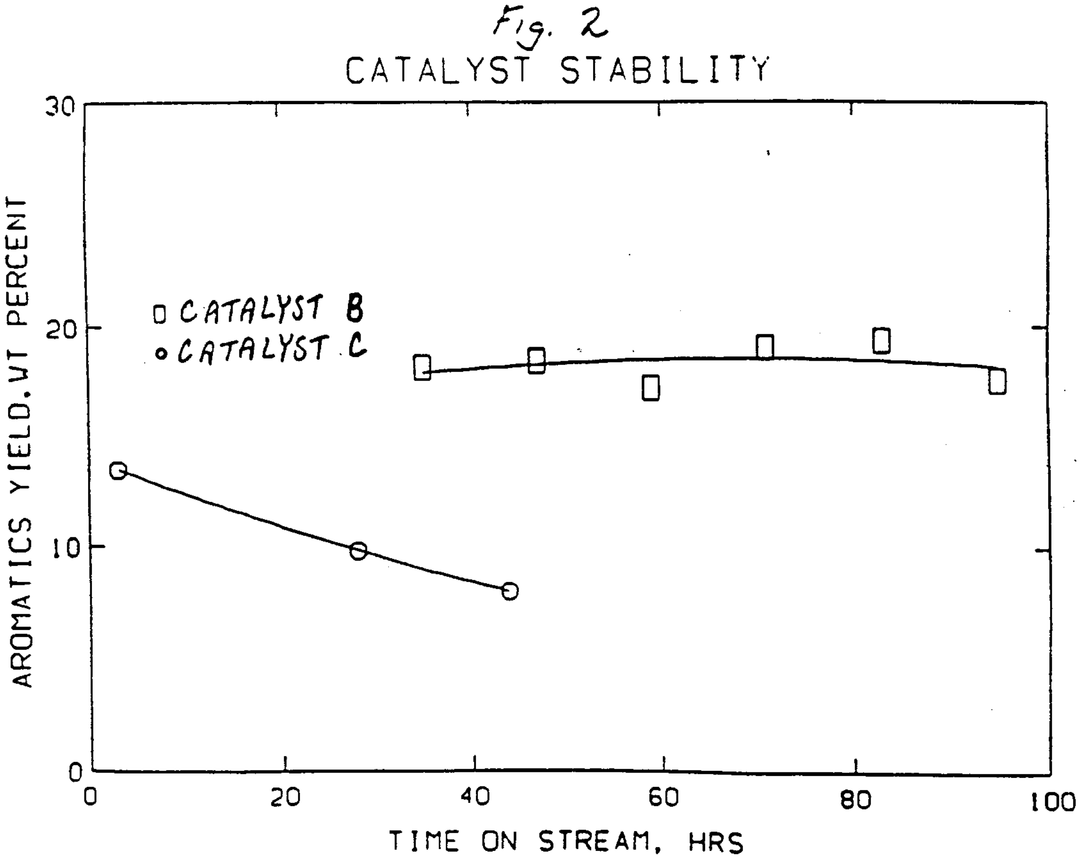
CATALYST STABILITY
AROMATICS YIELD,WT PERCENT
CATALYST B
CATALYST C
0
10
20
30
0
20
40
60
80
100
TIME ON STREAM, HRS